# EUROPEAN PATENT SPECIFICATION

(11) **EP 3 758 563 B1**
(45) Date of publication and mention of the grant of the patent: **29.12.2021**
(21) Application number: 19706971.9
(22) Date of filing: 21.02.2019
(51) Int. Cl.: A47J 31/40, A47G 19/34, G01F 13/00, B65D 83/06

(54) **DEVICE FOR DOSING AND POURING AN AMOUNT OF GROUND COFFEE POWDER INTO A COFFEE FILTER OF A COFFEE-MAKING APPARATUS**
VORRICHTUNG ZUM DOSIEREN UND AUSGIESSEN EINER MENGE GEMAHLENEN KAFFEEPULVERS IN EINEN KAFFEEFILTER EINER KAFFEEMASCHINE
DISPOSITIF DE DOSAGE ET DE VERSEMENT D'UNE QUANTITÉ DE POUDRE DE CAFÉ MOULU DANS UN FILTRE À CAFÉ D'UN APPAREIL DE PRÉPARATION DE CAFÉ

(30) Priority: 28.02.2018 IT 201800003119
(43) Date of publication of application: 06.01.2021
(73) Proprietor: Trisolini, Giorgio, 74019 Palagiano (TA) (IT)
(72) Inventor: Trisolini, Giorgio, 74019 Palagiano (TA) (IT)
(74) Representative: Balsamo, Andrea
(86) International application number: PCT/EP2019/054287
(87) International publication number: WO 2019/166312

(56) References cited:
- EP-A1- 0 234 332
- EP-A1- 2 008 554
- WO-A2-2006/133699
- WO-A2-2014/045114

## Description

### Technical Field

The proposed invention falls within the technical field of devices for dosing and pouring ground coffee powder into a coffee filter of an apparatus for preparing a beverage known as coffee.

### Background Art

Devices of the kind are disclosed, for instance, in EP 0 234 332 A1 and EP 2 008 554 A1.

In the context of the present invention, it is necessary to distinguish between two different operations related to the preparation of a coffee beverage; that is, pouring and dosing of ground coffee powder.

The operation of pouring ground coffee powder into a coffee filter requires particular care and is subject to the consumer's unique skills. This pouring operation allows the coffee machine to be loaded and the coffee beverage to be prepared by passing hot water through the coffee filter.

In connection with the operation of dosing the ground coffee powder, the dose of ground coffee powder is adjusted according to the consumer's preferences and demands. A larger or smaller quantity and a greater or lesser pressing of the ground coffee powder contained in the coffee filter may result in a more or less intense taste and a more or less opaque colouring of the liquid coffee beverage thus prepared.

Examining the existing available non-automatic/non-electric devices of the kind related to the subject-matter of the present invention, it can be noted that the ground coffee powder can be poured either manually, for example using a coffee measure scoop or the like, or by means of a cylindrical ground coffee powder container, which contains the ground coffee powder and allows the ground coffee powder to be poured into the coffee filter by means of a rotating scoop-dispenser; that is, after the scoop is filled by gravity feed with the ground coffee powder in the container, the turning of a small lever causes the scoop to turn over and hence the ground coffee powder is caused to flow into the moka or espresso coffee filter.

This metering container can be of two kinds depending on the type of coffee filter to be filled. If the coffee filter is a moka filter, the container may provide for arrangements such as circular rims of different diameter which are provided on the container's bottom base and allow the container to fit directly on the moka pot boiler with the typical funnel shaped coffee filter (see Italian patent application no. FG2010A000007).

In the case of espresso coffee filters, however, there appears to be no useful device for preventing or avoiding the ground coffee powder from spilling out from the coffee filter when it is poured. In fact, some ground coffee powder will inevitably always cover the edges of the coffee filter. This, of course, is prejudicial to the cleanness of the coffee machine and requires the coffee machine to be washed thoroughly after a coffee is brewed.

In addition, ground coffee powder containers/dispensers must of course be refilled with ground coffee powder. The same is sold commercially in special vacuum-sealed bags typically in the shape of a parallelepiped. Although a typical powder coffee container/dispenser is closed most of the time in an (apparently) air-tight way, the fact that the ground coffee powder is poured from its package into the container/dispenser has been found to affect the coffee's aroma. The coffee powder aroma gradually degrades in time when it is in contact with the air. Even in the case where there is a system, as disclosed in the Italian patent application no. VR2011A000221, which allows the ground coffee powder to be extracted directly from its vacuum packaging in which it is sold, the amount of ground coffee powder that the same system can dispense is limited. In other words, since a device such as the one illustrated in the Italian patent application no. VI2011A000221 can contain only one package of ground coffee powder, the maximum number of coffee beverages that can be dispensed is thus limited. In fact, since it is possible to prepare about 18/20 cups of coffee from a common vacuum-sealed package of ground coffee powder, the amount of ground coffee powder available for consumption by an average family is quite limited (e.g., a family of six people each drinking three coffees per day means 6 cups of coffee x 3 times a day = 18 cups). Thus, the vacuum-sealed package containing the ground coffee powder requires to be loaded into the container/dispenser several times in a short time period according to consumption.

Moreover, with regard to the problem of dosing the ground coffee powder, users presently have a limited set of tools at their disposal. In fact, if a user doses the ground coffee powder in the filter with a measure scoop or similar, she/he will have the disadvantage of not being able to dose exactly the same quantity of ground coffee powder each time for the simple fact that this operation requires some skill. In the case, instead, where a user employs a ground coffee powder container of the kind described above, she/he shall have to be content with dosing always the same unit quantity of ground coffee powder without being able to change it according to her/his preference.

### Disclosure of Invention

The present invention is aimed at solving the problems identified above relating to the current state of the art. The solution to these problems is provided by a device having the features of claim 1.

### Brief Description of Drawings

The present invention will be set forth in part in the description that follows, and in part will become apparent from the following drawings, wherein:
Fig. 1 is an exploded view of the device according to the invention,
Fig. 2 is a perspective view of the device according to the invention, Fig. 3 is a perspective view of the device according to the invention showing how a package of ground coffee powder is inserted into the device,
Fig. 4 is a perspective view of the bottom portion of the device in Fig.2,
Fig. 5 is an enlarged view of the gear mechanism of the device in Fig. 1,
Fig. 6 is an exploded view of the valve elements mounted in the device of Fig. 1, and
Fig. 7 is a perspective view of the device of the invention as it is used to dose and pour ground coffee powder into an espresso coffee filter.

### Best Mode for Carrying Out the Invention

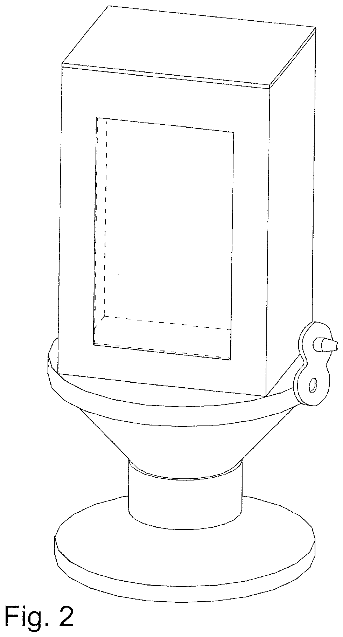

The device according the present invention has a parallelepiped shape in the upper part and a conical/cylindrical shape in the lower part (Fig. 2). The dimension of the parallelepiped upper part may vary, while keeping the dimension of lower part substantially unchanged, in order to accommodate either one or two vacuum-sealed packages of ground coffee powder, as explained below.

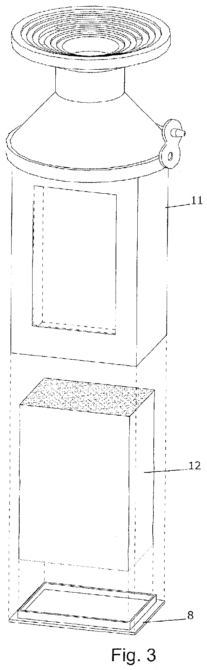

The upper part allows for the accommodation of one or two vacuum-sealed packages of ground coffee powder which, having previously been opened on a short side thereof, can then be inserted inside the aforementioned device when it is turned upside down (Fig. 3). This allows the vacuum sealed package(s) to be utilized as far as possible to contain the ground coffee powder, thus preserving the ground coffee powder's organoleptic properties for a longer time and, moreover, a greater quantity of coffee will thus be available compared to the existing devices. The ground coffee powder in the package(s) received in parallelepiped shaped upper part of the device is fed by gravity in the conical/cylindrical shaped lower part of the device.

The upper part of the device is provided with a lid (Fig.3, ref. no. 8) with a raised edge whose particular size allows the typical vacuum-sealed package(s) of ground coffee powder (Fig. 3, ref. no. 12) to be fitted exactly inside the upper part of the device, so that the package remains firmly in position when the device is loaded. When the device is turned upside down, the lid can be removed to allow the vacuum-sealed package(s) of ground coffee powder to be loaded into the device (Fig. 3).

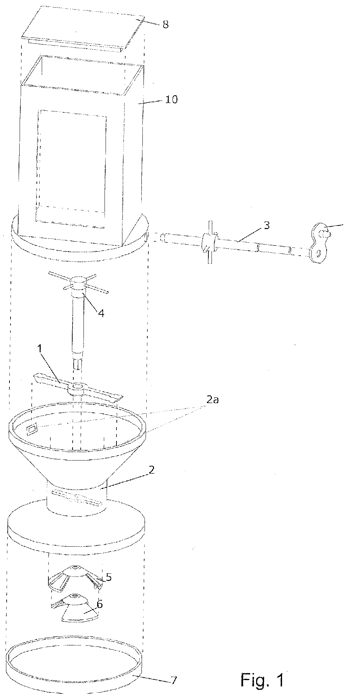

At the bottom of the upper part of the device there is provided a gear mechanism which can be operated by means of a crank handle or the like provided on one side of a base of the upper part (Fig. 1, ref. no. 9).

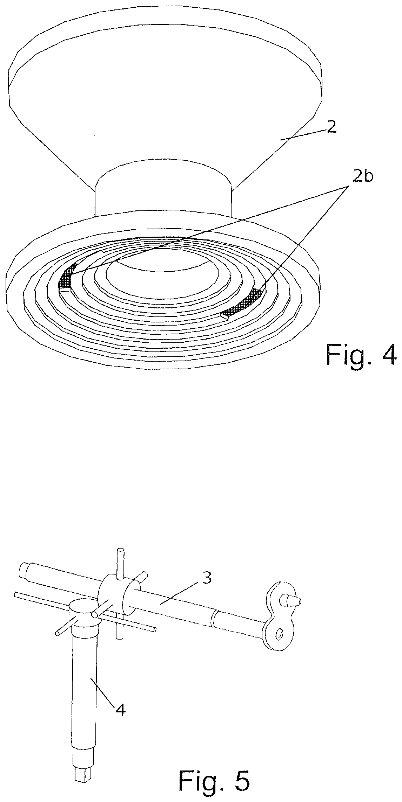

The aforesaid gear mechanism comprises two rods: a horizontal rod with four radially extending pins (Figs. 1 and 5, ref. no. 3) and a vertical rod (Figs. 1 and 5, ref. no. 4) with four radially extending pins, two opposite of which exhibit together a total extension which is approximately equal to the upper diameter of the lower conical part of the device. The rotary movement of these latter pins prevents the ground coffee powder exiting the vacuum-sealed package(s) from getting stuck in the upper region of the lower conical part of the device.

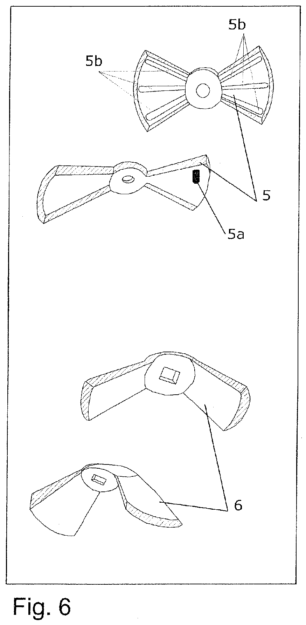

The gear mechanism drives a dosing valve arranged in the lower cylindrical part of the device (Fig. 6). The dosing valve comprises two conical valve elements, whose concavity is directed downwards (Figs. 1 and 6, ref. nos. 5 and 6). Each of these valve elements exhibits two openings on symmetrical and opposite sides thereof. By operating the crank handle (Fig. 1, ref. no. 9), the gear mechanism is rotated and causes the two conical valve elements either to overlap one another or not, depending on the direction of rotation. By rotating the crank handle in a first direction, the two conical valve elements are caused to overlap one another, so that the symmetrical openings are positioned one above the other and thus allow the ground coffee powder to flow into a coffee filter. By rotating the crank handle in a second opposite direction, the two conical valve elements are caused to close the two symmetrical openings, so that the dosing valve is caused to close and thus prevents the ground coffee powder from flowing downwards into the coffee filter.

It should be noted that the lower valve element (Fig.1, ref. no. 6) is fixed relative to the rod (Fig. 1, ref. no. 4) and, consequently, it rotates together with the rotary movement of the latter. The upper valve element (Fig. 1, ref. no. 5), instead, is free and can be caused by the lower valve element to rotate by means of a pin-like element which projects from the lower side of the upper valve element (Fig. 6, ref. no. 5a). Preferably, the upper valve element is provided with radial rib-like elements projecting from its upper side which are suitable for agitating the ground coffee powder in the lower region of the conical/cylindrical lower part (Fig. 1, ref. no. 5, and Fig. 6, ref. no. 5b).

Furthermore, the lower valve element (Fig. 6, ref. no. 6) has flared side portions. By means of the rotary movement operated by the crank handle, the flared side portions allow to press and flatten the ground coffee powder that fills filter.

The dosing valve allows the filter to be filled with a desired quantity of ground coffee powder, and not with a predetermined quantity.

Furthermore, the fact that the valve has a double opposite and symmetrical opening also leads to a greater speed of fall of the ground coffee powder in the filter.

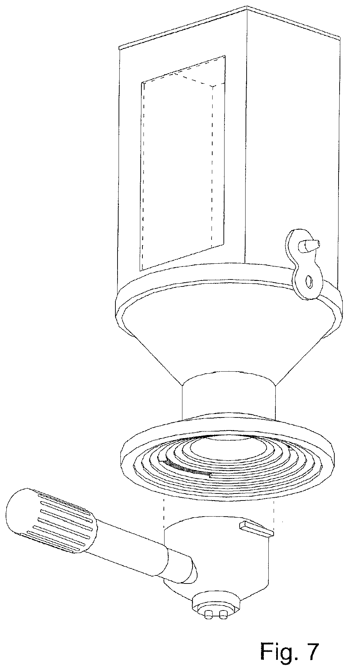

Finally, it should be noted that the device has a base (Fig. 4) whose shape is specifically adapted to typical espresso filters of standard size (FIG 7), and exhibits two notches corresponding to the fins (Fig. 3, ref. no. 2b), usually made of metal, of the common filters for non-commercial espresso coffee machines.

The device in its entirety and in all its parts can be made in larger or smaller sizes, according to the user's needs and the intended domestic or commercial use.

## Claims

1. Hand-operated device for dosing and pouring an amount of ground coffee powder into a coffee filter of a coffee-making apparatus, comprising a dosing valve and means for actuating said dosing valve, **characterized in that** said dosing valve comprises a valve body (2) containing two superimposed conical valve elements (5, 6) with downward facing concavity, each of said valve elements (5,6) having two symmetrical and opposite openings, and **in that** said means for actuating said dosing valve consist of a gear mechanism capable of rotating said valve elements (5, 6) one relative to the other, in a reversible manner, from an open valve position, in which said openings in said valve elements (5, 6) are at least partially superimposed and allow the passage of said amount of ground coffee powder, to a closed valve position, in which said openings in said valve elements (5, 6) are staggered and prevent the passage of said amount of ground coffee powder, wherein said gear mechanism includes a support (1) fixed transversely inside said valve body (2), a first rod (4) mounted centrally and axially inside said valve body (2) on said support (1) and having a pinwheel, and a second rod (3) mounted transversely inside said valve body (2) and orthogonally to said first rod (4), and having a pinwheel that engages said pinwheel of said first rod (4), said valve elements (5, 6) being mounted on said first rod (4) so that the lower valve element (6) rotates together with said first rod (4), while the upper valve element (5) is free, but can be driven into rotation by said lower valve element (6) by means of a pin (5a) protruding from its lower side which engages with said lower valve element (6) when said valve elements (5, 6) have been brought into the closed valve position, said second rod (3) having one end protruding externally from said valve body (2) and supporting a control element (9) of said gear mechanism.

2. Device according to claim 1, **characterized in that** two opposite pins of the pinwheel of said first rod (4) have a greater length than the other pins of said pinwheel, in order to be able to mix the ground coffee powder and prevent it from remaining stuck in the valve body (2) .

3. Device according to claim 1, **characterized in that** the upper valve element (5) has radial rib-like elements (5b) projecting from its upper side.

4. Device according to claim 1, **characterized in that** said lower conical valve element (6) has flared side portions configured to press and smoothen the ground coffee powder poured and dosed into the said coffee filter.

5. Device according to claim 1, **characterized in that** the valve body (2) has a base at the bottom which is configured so that it can be adapted to different sizes of coffee filters, said base being provided to this end with opposite arched notches (2b) adapted to receive corresponding circumferential projections of said coffee filters.

6. Device according to claim 1, **characterized in that** the valve body (2) has a housing (10) on the top for containing at least one pack of powdered coffee previously opened to allow the ground coffee powder to fill the valve body (2).

7. Device according to claim 6, **characterized in that** said housing (10) is equipped with a cover (8) having a raised edge configured to hold firmly in place at least one pack of ground coffee powder during the loading operation of the device.

8. Device according to one of claims 1 to 7, **characterized in that** in use said dosing valve is brought into the closed valve position, said device is turned upside down, so that said base of said valve body (2) is facing upwards and said housing (10) is facing downwards, said at least one package of powdered coffee previously opened on its upper side is introduced into said housing (10) and said housing (10) is firmly closed by means of said cover (8), and **in that** said device is turned upside down again, so that now said base of said valve body (2) is facing downwards and said housing (10) is facing upwards, and said device is placed with said base on a coffee filter of a coffee-making apparatus, and further **in that** said ground coffee powder exits by gravity from said at least one pack of ground coffee powder and fills said valve body (2), and the user acts on said control element (9) of said gear mechanism to open said dosing valve and pour a desired dose of ground coffee powder from said valve body (2) into said coffee filter, and then to close said dosing valve.

## Patentansprüche

1. Handbetätigte Vorrichtung zum Dosieren und Einfüllen einer Menge gemahlenen Kaffeepulvers in einen Kaffeefilter einer Kaffeemaschine, welche ein Dosierventil und Mittel zum Betätigen des Dosierventils umfasst, **dadurch gekennzeichnet, dass** das Dosierventil einen Ventilkörper (2) umfasst, der zwei übereinanderliegende konische Ventilelemente (5, 6) mit nach unten gerichteter Konkavität umfasst, worin jedes der Ventilelemente (5, 6) zwei symmetrische und abgewandte Öffnungen aufweist, und darin dass die Mittel zum Betätigen des Dosierventils aus einem Getriebemechanismus bestehen, der geeignet ist, die Ventilelemente (5, 6) relativ zueinander umkehrbar aus einer offenen Ventilstellung, in der die Öffnungen in den Ventilelementen (5, 6) zumindest teilweise übereinander liegen und den Durchgang der Menge an gemahlenem Kaffeepulver ermöglichen, in eine geschlossene Ventilstellung drehen können, in der die Öffnungen in den Ventilelementen (5, 6) versetzt sind und den Durchgang der Menge an gemahlenem Kaffeepulver verhindern, worin der Getriebemechanismus umfasst: einen Träger (1), der quer innerhalb des Ventilkörpers (2) befestigt ist, eine erste Stange (4), die mittig und axial innerhalb des Ventilkörpers (2) auf dem Träger (1) befestigt ist und ein Zahnrad aufweist, und eine zweite Stange (3), die quer innerhalb des Ventilkörpers (2) und orthogonal zu der ersten Stange (4) angebracht ist und ein Zahnrad aufweist, das in das Zahnrad der ersten Stange (4) eingreift, worin die Ventilelemente (5, 6) auf der ersten Stange (4) befestigt sind, so dass sich das untere Ventilelement (6) zusammen mit der ersten Stange (4) dreht, während das obere Ventilelement (5) frei ist, aber durch das untere Ventilelement (6) mittels eines von seiner Unterseite hervorstehenden Stifts (5a), der in das untere Ventilelement (6) eingreift, in Drehung versetzt werden kann, wenn die Ventilelemente (5, 6) in die geschlossene Ventilstellung gebracht worden sind, worin die zweite Stange (3) mit einem Ende von dem Ventilkörper (2) nach außen hervorsteht und ein Steuerelement (9) des Getriebes trägt.

2. Vorrichtung nach Anspruch 1, **dadurch gekennzeichnet, dass** zwei abgewandte Stifte des Zahnrads der ersten Stange (4) eine größere Länge aufweisen als die anderen Stifte des Zahnrads, um das gemahlene Kaffeepulver mischen zu können und zu verhindern, dass dieses im Ventilkörper (2) stecken bleibt.

3. Vorrichtung nach Anspruch 1, **dadurch gekennzeichnet, dass** das obere Ventilelement (5) radiale rippenartige Elemente (5b) aufweist, die von seiner Oberseite hervorstehen.

4. Vorrichtung nach Anspruch 1, **dadurch gekennzeichnet, dass** das untere konische Ventilelement (6) aufgeweitete Seitenabschnitte aufweist, die ausgestaltet sind, das in den Kaffeefilter eingefüllte und dosierte gemahlene Kaffeepulver zu pressen und zu glätten.

5. Vorrichtung nach Anspruch 1, **dadurch gekennzeichnet, dass** der Ventilkörper (2) an der Unterseite eine Basis aufweist, die ausgestaltet ist, an verschiedene Größen von Kaffeefiltern angepasst zu werden, wobei die Basis an diesem Ende mit abgewandten gewölbten Kerben (2b) versehen ist, die zur Aufnahme entsprechender Umfangsvorsprünge der Kaffeefilter geeignet sind.

6. Vorrichtung nach Anspruch 1, **dadurch gekennzeichnet, dass** der Ventilkörper (2) an der Oberseite ein Gehäuse (10) aufweist, das mindestens eine Packung Kaffeepulver enthalten kann, die zuvor geöffnet wurde, damit das gemahlene Kaffeepulver den Ventilkörper (2) füllen kann.

7. Vorrichtung nach Anspruch 6, **dadurch gekennzeichnet, dass** das Gehäuse (10) mit einem Deckel (8) versehen ist, der einen erhöhten Rand aufweist, der ausgestaltet ist, mindestens eine Packung gemahlenem Kaffeepulvers während des Ladevorgangs der Vorrichtung fest an seinem Platz zu halten.

8. Vorrichtung nach einem der Ansprüche 1 bis 7, **dadurch gekennzeichnet, dass** bei der Verwendung das Dosierventil in die geschlossene Ventilstellung gebracht wird, die Vorrichtung kopfüber angeordnet wird, so dass die Basis des Ventilkörpers (2) nach oben und das Gehäuse (10) nach unten gerichtet ist, die mindestens eine Packung Kaffeepulver, die zuvor an ihrer Oberseite geöffnet wurde, in das Gehäuse (10) eingeführt wird und das Gehäuse (10) mittels des Deckels (8) fest verschlossen wird, und die Vorrichtung erneut kopfüber angeordnet wird, so dass nun die Basis des Ventilkörpers (2) nach unten und das Gehäuse (10) nach oben zeigt, und die Vorrichtung mit der Basis auf einen Kaffeefilter einer Kaffeemaschine gestellt wird, und dass ferner das gemahlene Kaffeepulver durch Schwerkraft aus der mindestens einen Packung gemahlenen Kaffeepulvers austritt und den Ventilkörper (2) füllt, und der Benutzer auf das Steuerelement (9) des Getriebes einwirkt, um das Dosierventil zu öffnen und eine gewünschte Dosis gemahlenen Kaffeepulvers aus dem Ventilkörper (2) in den Kaffeefilter zu gießen und dann das Dosierventil zu schließen.

## Revendications

1. Dispositif à commande manuelle pour doser et verser une quantité de poudre de café moulu dans un filtre à café d'une cafetière, comprenant une valve de dosage et des moyens pour actionner ladite valve de dosage, **caractérisé en ce que** ladite valve de dosage comprend un corps de valve (2) contenant deux éléments de valve coniques superposés (5, 6) avec une concavité orientée vers le bas, chacun desdits éléments de valve (5, 6) ayant deux ouvertures symétriques et opposées, et **en ce que** lesdits moyens pour actionner ladite valve de dosage se composent d'un mécanisme d'engrenage capable de faire tourner lesdits éléments de valve (5, 6) l'un par rapport à l'autre, d'une manière réversible, d'une position de valve ouverte dans laquelle lesdites ouvertures dans lesdits éléments de valve (5, 6) sont au moins partiellement superposées et permettent le passage de ladite quantité de poudre de café moulu, à une position de valve fermée dans laquelle lesdites ouvertures dans lesdits éléments de valve (5, 6) sont en quinconce et empêchent le passage de ladite quantité de poudre de café moulu, dans lequel ledit mécanisme d'engrenage comprend un support (1) fixé de manière transversale à l'intérieur dudit corps de valve (2), une première tige (4) montée de manière centrale et axiale à l'intérieur dudit corps de valve (2) sur ledit support (1) et ayant un moulinet, et une seconde tige (3) montée de manière transversale à l'intérieur dudit corps de valve (2) et orthogonale par rapport à ladite première tige (4) et ayant un moulinet qui met en prise ledit moulinet de ladite première tige (4), lesdits éléments de valve (5, 6) étant montés sur ladite première tige (4) de sorte que l'élément de valve inférieur (6) tourne conjointement avec ladite première tige (4), alors que l'élément de valve supérieur (5) est libre, mais peut être entraîné en rotation par ledit élément de valve inférieur (6) au moyen d'une broche (5a) faisant saillie de son côté inférieur qui se met en prise avec ledit élément de valve inférieur (6) lorsque lesdits éléments de valve (5, 6) ont été amenés dans la position de valve fermée, ladite seconde tige (3) ayant une extrémité faisant saillie extérieurement par rapport audit corps de valve (2) et supportant un élément de commande (9) dudit mécanisme d'engrenage.

2. Dispositif selon la revendication 1, **caractérisé en ce que** deux broches opposées du moulinet de ladite première tige (4) ont une longueur supérieure aux autres broches dudit moulinet, afin de pouvoir mélanger la poudre de café moulu et l'empêcher de rester collée dans le corps de valve (2).

3. Dispositif selon la revendication 1, **caractérisé en ce que** l'élément de valve supérieur (5) a des éléments radiaux en forme de nervure (5b) faisant saillie de son côté supérieur.

4. Dispositif selon la revendication 1, **caractérisé en ce que** ledit élément de valve conique inférieur (6) a des parties latérales évasées configurées pour comprimer et lisser la poudre de café moulu versée et dosée dans ledit filtre à café.

5. Dispositif selon la revendication 1, **caractérisé en ce que** le corps de valve (2) a une base au fond qui est configurée de sorte qu'elle peut être adaptée à différentes tailles de filtres à café, ladite base étant prévue à cette extrémité, avec des encoches arquées (2b) opposées adaptées pour recevoir des saillies circonférentielles correspondantes desdits filtres à café.

6. Dispositif selon la revendication 1, **caractérisé en ce que** le corps de valve (2) a un boîtier (10) sur le dessus pour contenir au moins un paquet de café en poudre préalablement ouvert pour permettre à la poudre de café moulu de remplir le corps de valve (2).

7. Dispositif selon la revendication 6, **caractérisé en ce que** ledit boîtier (10) est équipé avec un couvercle (8) ayant un bord levé configuré pour maintenir fermement en place au moins un paquet de poudre de café moulu pendant l'opération de chargement du dispositif.

8. Dispositif selon l'une des revendications 1 à 7, **caractérisé en ce qu'**à l'usage, ladite valve de dosage est amenée dans la position de valve fermée, ledit dispositif est retourné, de sorte que ladite base dudit corps de valve (2) est orientée vers le haut et ledit boîtier (10) est orienté vers le bas, ledit au moins un paquet de café en poudre préalablement ouvert sur son côté supérieur, est introduit dans ledit boîtier (10) et ledit boîtier (10) est fermement fermé au moins dudit couvercle (8), et **en ce que** ledit dispositif est à nouveau retourné, de sorte que maintenant ladite base dudit corps de valve (2) est orientée vers le bas et ledit boîtier (10) est orienté vers le haut, et ledit dispositif est placé avec ladite base sur un filtre à café d'une cafetière, et en outre **en ce que** ladite poudre de café moulu sort, par gravité, dudit au moins un paquet de poudre de café moulu et remplit ledit corps de valve (2), et l'utilisateur agit sur ledit élément de commande (9) dudit mécanisme d'engrenage pour ouvrir ladite valve de dosage et pour verser une dose souhaitée de poudre de café moulu dudit corps de valve (2) dans ledit filtre à café, et ensuite pour fermer ladite valve de dosage.
